## Europäisches Patentamt

## European Patent Office

(11) Publication number: **0 203 662**
**B1**

## Office européen des brevets

(12) **EUROPEAN PATENT SPECIFICATION**

(45) Date of publication of the patent specification:
**04.10.89**

(51) Int. Cl.⁴: **B60R 16/02**, A01F 15/00,
H04Q 9/14

(21) Application number: **86200880.2**

(22) Date of filing: **21.05.86**

(54) A communication system.

(30) Priority: **30.05.85  NL 8501552**

(73) Proprietor: **Multinorm B.V., Hoofdweg 1278, NL-2153 LR Nieuw-Vennep(NL)**

(43) Date of publication of application:
**03.12.86 Bulletin 86/49**

(72) Inventor: **Van der Voort van der Kley, Antonius Th., Heemskerklaan 40, NL-2181 XR Hillegom(NL)**
Inventor: **Henning, Johan, Fluitekruid 26, NL-2411 MK Bodegraven(NL)**

(45) Publication of the grant of the patent:
**04.10.89 Bulletin 89/40**

(74) Representative: **Hoijtink, Reinoud et al, OCTROOIBUREAU ARNOLD & SIEDSMA Sweelinckplein 1, NL-2517 GK Den Haag(NL)**

(84) Designated Contracting States:
**AT BE CH DE FR GB IT LI LU NL SE**

(56) References cited:
**EP-A- 0 011 991**
**EP-A- 0 150 887**
**WO-A-82/01354**
**BE-A- 569 903**
**DE-A- 1 632 824**
**DE-A- 2 433 025**
**DE-A- 3 438 497**
**NL-A- 7 200 293**
**US-A- 4 413 685**

## Description

This invention relates to a communication system such as is described in the preamble of claim 1.

In this communication system, known from DE-A 1 632 824, which is generally applied in agriculture, a separate conductor or plurality of conductors is reserved for each device connected to the communication system. When the number of devices is large this leads to a large number of conductors, so that the communication system, which connects the agricultural implement to the tractor, becomes very bulky.

Moreover, the connecting plugs at each end of the cable are large and expensive. Considering the nature of the industry, there is a large chance of contaminating the connectors. There exists a tendency to increase the number of sensors, indicating devices, control devices and operating devices, so that the above-mentioned difficulties are more likely to increase than decrease. Another difficulty is that upon malfunction of one conductor the other conductors present in the cable remain functioning correctly, so that the user notices relatively late that a defect has occurred in the communication system.

The invention has for its aim to eliminate the above-mentioned disadvantages.

This is achieved in accordance with the invention by the features such as are described in the characterizing part of claim 1.

Owing to the features mentioned, it suffices to have a connecting cable with just a few conductors, for example for the power-supply and the signals, or a single wireless transmission channel. Admittedly more time is needed for the serial transmission of the signal pulses, but considering the speed of electronics as opposed to mechanical control devices, this is not a disadvantage. Another advantage of the present invention is that a defect in the communication medium is immediately noticeable, since all communication between the agricultural implement and the tractor will be terminated. If there is employed a simple, inexpensive standard cable of which supplies can be stocked, the user can quickly restore communication by replacing the cable.

A further standardization which benefits the simplicity is achieved by the features such as are described in claim 2. Each terminal unit serves here as an interface adapter unit between the connected device and the electronics associated with the cable.

It is remarked that DE-A 2 433 025 discloses a fixed communication system in a motor vehicle. The signals are sequentially transmitted through one single communication channel. There is, however, no disclosure in this document of a plugable or wireless communication system between a controlled apparatus, such as an agricultural device and a separate controlling apparatus, such as a tractor.

The invention will be further elucidated by reference to the drawings.

In the drawings, in schematic fashion:

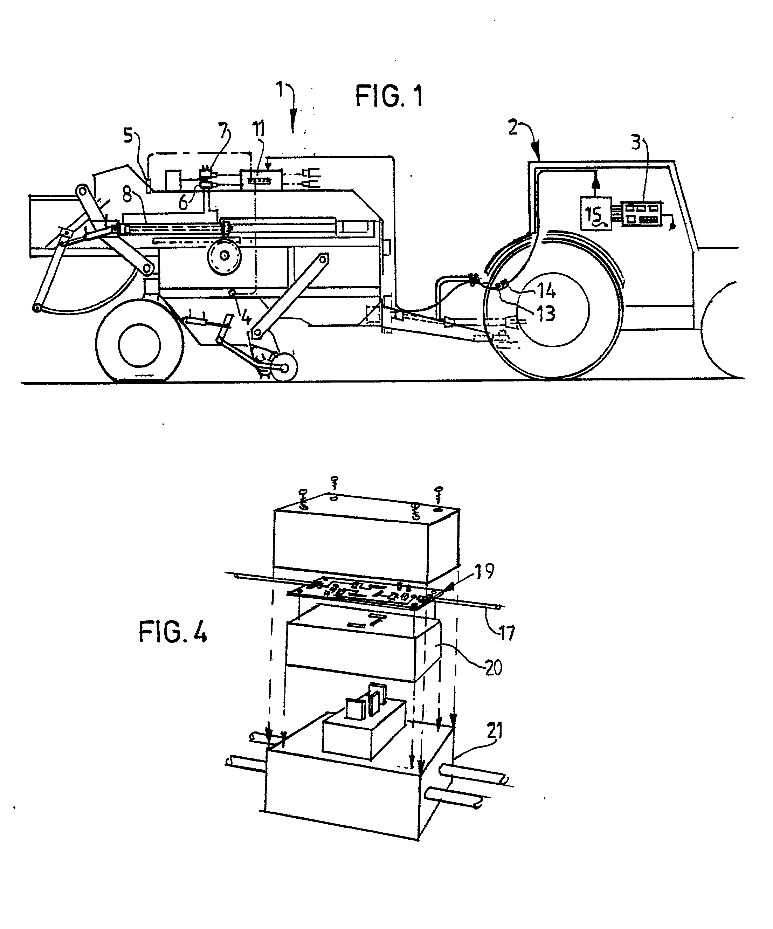

figure 1 shows a bale press and a tractor which are connected by a cable,

figure 2 shows an embodiment of the communication system according to the invention,

figure 3 shows another embodiment of the communication system according to the invention,

figure 4 shows the construction of a terminal unit connected to the cable.

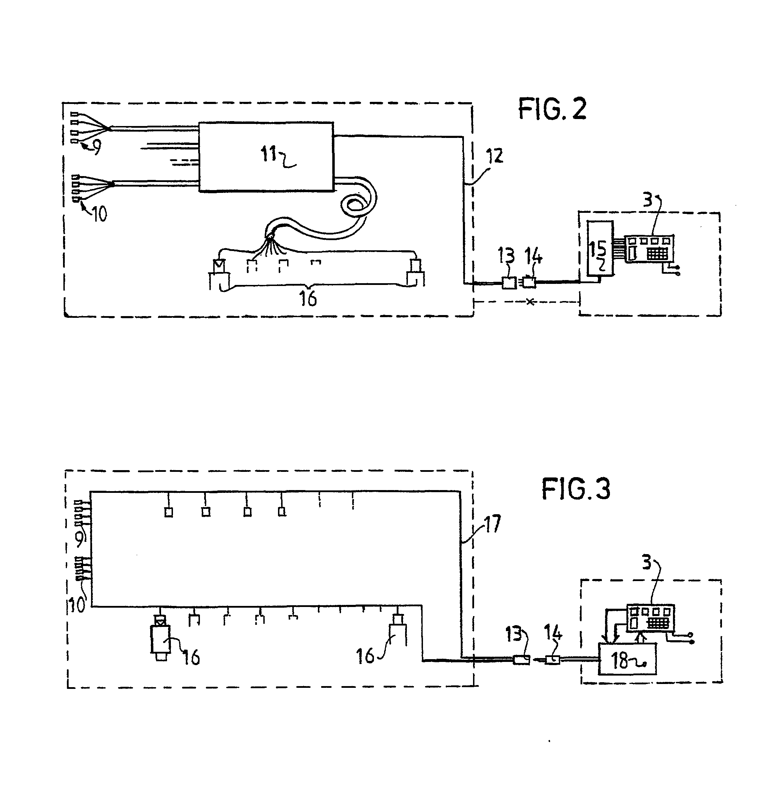

The agricultural implement in the form of a bale press 1 is towed by a tractor and controlled from the tractor by means of operating panel 3. For providing information to the operator, a number of sensors, for instance 4 and 5, are mounted on the implement. For control, use is made of hydraulic valves such as 6 and 7, which operate piston 8. In accordance with the invention, signals originating from the sensors such as 9 and 10 (see figure 2) are converted in terminal unit 11 into a series of pulse-formed signals which are transmitted over thin cable 12 via connector plugs 13 and 14 to terminal unit 15 on the tractor. Terminal unit 15 converts inter alia the series of pulse signals into parallel signals for operating panel 3, in order to communicate the funktioning of the bale press to the operator via operating panel 3. On the operating panel there are also situated control devices which, depending upon their position, send out control signals in parallel form to terminal unit 15, where they are converted to a series of signal pulses and sent via cable 12 to terminal unit 11. Terminal unit 11 converts the series of control pulses into parallel signals and sends these to connected hydraulic valves 16.

Figure 3 shows another embodiment in which each connected device, namely a sensing device, control device, operating device or indicator device, is connected directly to cable 17, which is arranged as a ring main, via its own terminal unit 18 in the form of a transmitter/receiver, which terminal unit 18 also functions as interface adapter unit. The cable is used in a time-sharing fashion according to a specific hierarchy of the terminal units. It is sufficient to use a very thin standard cable which can be mounted into the implement during production, and to which terminal units and their associated devices can be connected later as required. Operating panel 3 is also connected to the cable via terminal unit 18. Terminal unit 18 takes the form of a microprocessor which picks up the signals from the sensors through the cable, and sends control pulses for the control device via cable 17. The information transfer is digitalized.

Figure 4 shows, on a larger scale, the connection to cable 17 of a control device in the form of a hydraulic valve. The circuit for recognition of the address code intended for this unit is accommodated on printed circuit 19. The printed circuit is shown in series with cable 17. It should be noted however that inductive coupling can also be applied by means of an induction coil wound around cable 17. Upon recognition of a message intended for this unit, the message is further transmitted to circuit 20, which forms the control signals for hydraulic valve 21.

It should be noted that if the communication medium is a wireless connection, the controlled apparatus must have its own supply source for electrical power.

It is preferable that different kinds of agricultural implements can cooperate with the same controlling tractor. To this end, the argricultural implement can be assigned a code-word characteristic of the kind of implement, the tractor then being provided with means for identifying the code-word. The controlling program is then selected in dependance on the code-word, by means of either software or hardware. Moreover, particularly in the case of wireless transmission, it is desirable that the communication is unambiguous. To this end, each controlling and each controlled apparatus can be assigned a code-word which couples operation of these apparatuses, which code-word is always transmitted at the start of transmission of a message, so that only the apparatus concerned reacts to the message. The intended code words can be fixed words, or can be arbitrarily generated at the start of the communication connection and stored by the receiving unit.

## Claims

1. A communication system for transmission of messages between a controlled agricultural apparatus (1) and a controlling tractor, with a communication medium (12) between the agricultural apparatus and the tractor with, on the agricultural apparatus, remotely electrically controlled controlling devices (6, 7) and electrical sensing devices (4, 5) providing measured values, and, on the tractor, an operating panel (3) displaying operating devices and indication devices for representing values measured by the sensing devices (4, 5), characterized in that the sensing devices (4, 5), the controlling devices (6, 7, 16, 21), the operating devices and the indication devices are each through their own terminal unit (11, 15, 18) connected to the communication medium in the form of a plugable single channel (12, 17) by means of a terminal unit (11, 15, 18) in the form of a transmitter/receiver, and the terminal unit (11, 15, 18) comprises electric circuit means for coding and recognizing a characteristic recognition signal for the connected device, a circuit for the conversion of parallel signals into a series of pulses and circuits for the transmission and reception of the series of pulses, said pulses being transmitted through the same conductors.

2. A communication system as claimed in claim 1, characterized in that the communication medium is a wireless transmission channel.

3. A communication system as claimed in claims 1–2, characterized in that the controlling devices are hydraulic valves (6, 7, 16, 21).

4. A communication system as claimed in claim 1, characterized in that the indication devices are formed by a monitor screen.

5. A communication system as claimed in claims 1–8, characterized in that the controlled agricultural apparatus (1) carries a code-word characteristic of the type of apparatus, that the controlling tractor is provided with means for recording that code-word and that the control program is selected in dependance on that code-word.

6. A communication system as claimed in claims 1–5, characterized in that each controlled and each controlling device carries a code-word which engages the operation of that device.

7. A communication system as claimed in claim 6, characterized in that the code-word is generated by the controlling tractor at the commencement of communication and is stored in the controlled agricultural apparatus.

## Patentansprüche

1. Übertragungssystem zur Übermittlung von Nachrichten zwischen einem gesteuerten landwirtschaftlichen Gerät (1) und einem steuernden Traktor über ein Kommunikationsmedium (12) zwischen landwirtschaftlichem Gerät und Traktor, wobei auf dem landwirtschaftlichen Gerät elektrisch ferngesteuerte Steuervorrichtung (6, 7) und elektrische Sensoren (4, 5) vorgesehen sind, die Meßwerte liefern und auf dem Traktor eine Bedienungstafel (3) vorgesehen ist, die die Arbeitsvorrichtungen bzw. Stellvorrichtungen und Anzeigevorrichtungen wiedergibt, um Werte zu repräsentieren, die durch die Sensoren (4, 5) gemessen wurden, dadurch gekennzeichnet, daß die Sensoren (4, 5), die gesteuerten Vorrichtungen (8, 7, 16, 21), die Arbeits- bzw. Stellvorrichtungen und die Anzeigevorrichtungen über ihre eigene Terminal-Einheit (11, 15, 18) an das Kommunikationsmedium in Form eines steckbaren einzigen Kanals (12, 17) über eine Terminal-Einheit (11, 15, 18) in Form eines Sendeempfängers angeschlossen sind, und daß die Terminal-Einheit (11, 15, 18) eine elektrische Schaltung aufweist, um ein charakteristisches Erkennungssignal für die angeschlossene Vorrichtung zu kodieren und zu erkennen, und daß eine Schaltung vorgesehen ist, um parallele Signale in eine Impulsfolge umzuwandeln, und daß außerdem eine Schaltung vorgesehen ist, um die Impulsfolge zu übertragen und zu empfangen, wobei die Impulse über die gleichen Leiter übertragen werden.

2. Übertragungssystem nach Anspruch 1, dadurch gekennzeichnet, daß das Kommunikationsmedium ein drahtloser Funkübertragungskanal ist.

3. Übertragungssystem nach den Ansprüchen 1 und 2, dadurch gekennzeichnet, daß die Steuervorrichtung Hydraulikventile (6, 7, 16, 21) sind.

4. Übertragungssystem nach Anspruch 1, dadurch gekennzeichnet, daß die Anzeigevorrichtungen von einem Monitorschirm gebildet sind.

5. Übertragungssystem nach den Ansprüchen 1 bis 8, dadurch gekennzeichnet, daß das gesteuerte landwirtschaftliche Gerät (1) eine Vorrichtung mit einer Kodewortcharakteristik aufweist, und daß der steuernde Traktor mit Mitteln versehen ist, um jenes Kodewort aufzuzeichnen, und daß das Steuerprogramm in Abhängigkeit von dem Kodewort gewählt wird.

6. Übertragungssystem nach den Ansprüchen 1 bis 5, dadurch gekennzeichnet, daß jede gesteuerte und jede steuernde Vorrichtung ein Kodewort trägt, welches die Arbeitsweise der Vorrichtung bestimmt.

7. Übertragungssystem nach Anspruch 6, dadurch gekennzeichnet, daß das Kodewort durch den steuernden Traktor zu Beginn der Übertragung erzeugt und in dem gesteuerten landwirtschaftlichen Gerät gespeichert wird.

**Claims**

1. Système de communication pour la transmission de messages entre une machine agricole commandée (1) et un tracteur de commande, à l'aide d'un moyen de communication (12) situé entre la machine agricole et le tracteur, et dans lequel des dispositifs de commande (6, 7), télécommandés électriquement et des dispositifs électriques de détection (4, 5) délivrant des valeurs mesurées sont installés sur la machine agricole et un panneau de commande (3) comportant des dispositifs d'actionnement et des dispositifs indicateurs servant à représenter des valeurs mesurées par les dispositifs de détection (4, 5) sont installés sur le tracteur, caractérisé en ce que les dispositifs de détection (4, 5), les dispositifs de commande (6, 7, 16, 21), les dispositifs d'actionnement et les dispositifs indicateurs sont raccordés, chacun, par l'intermédiaire de leur propre unité terminale (11, 15, 18) au moyen de communication réalisé sous la forme d'un canal unique (12, 17) enfichable, à l'aide d'une unité terminale (11, 15, 18) réalisée sous la forme d'un émetteur/récepteur, et que l'unité terminale (11, 15, 18) comporte des moyens formant circuit électrique servant à coder et reconnaître un signal d'identification caractéristique pour le dispositif raccordé, un circuit pour la conversion de signaux parallèles en une suite d'impulsions et des circuits pour l'émission et la réception de la suite d'impulsions, lesdites impulsions étant transmises par l'intermédiaire des mêmes conducteurs.

2. Système de communication selon la revendication 1, caractérisé en ce que le moyen de communication est un canal de transmission sans fil.

3. Système de communication selon les revendications 1–2, caractérisé en ce que les dispositifs de commande sont des soupapes hydrauliques (6, 7, 16, 21).

4. Système de communication selon la revendication 1, caractérisé en ce que les dispositifs indicateurs sont formés par un écran de contrôle.

5. Système de communication selon les revendications 1–8, caractérisé en ce que la machine agricole commandé (1) porte une caractérisé formée d'un mot de code du type de machine, que le tracteur de commande est équipé de moyens pour enregistrer ce mot de code et que le programme de commande est sélectionné en fonction de ce mot de code.

6. Système de communication selon les revendications 1–5, caractérisé en ce que chaque dispositif commandé et chaque dispositif de commande comporte un mot de code, qui déclenche le fonctionnement de ce dispositif.

7. Système de communication selon la revendication 6, caractérisé en ce que le mot de code est produit par le tracteur de commande au début de la communication et est mémorisé dans la machine agricole commandée.

FIG. 1

FIG. 4

FIG. 2

FIG.3